# EUROPEAN PATENT APPLICATION

(11) **EP 0 610 671 A1**
(43) Date of publication of application: **17.08.1994**
(21) Application number: 94100419.4
(22) Date of filing: 13.01.1994
(51) Int. Cl.: H02P 3/18, G05D 13/62, H02P 6/02

(54) **Method of driving for automatic machines and device for the application of the said method**

(30) Priority: 10.02.1993 IT GE930006
(71) Applicant: SASIB S.p.A., I-40128 Bologna (IT)
(72) Inventor: Balboni, Alessandro, I-40057 Granarolo Emilia, Bologna (IT); Baldassarri, Fiorenzo, I-40128 Bologna (IT)
(74) Representative: Porsia, Attilio, Dr.

(57) **Abstract**

A method of driving for automatic machines, particularly for high-speed automatic machines consisting of a number of working units with alternate operation with synchronisation between the units, such as packing machines for cigarettes or similar, in which method the individual working units are driven by a single main electric motor (M) by means of associated transmission chains (3). According to the invention the variations of load on the main motor during the operating cycle of the machine are at least partially compensated for by the storage, in the form of reversible electrolytic energy, of the restored electrical energy of the main motor (M) in the phases of the machine cycle in which the resistant torque is inverted, and of the part of the electrical energy which is not supplied to the motor in the phases of the machine cycle in which the resistant torque is less than the mean value, and by the restoration of the said reversible electrolytic energy in the phases of the machine cycle in which the resistant torque exceeds the mean value.

## Description

The invention relates to a method of driving for automatic machines, particularly for high-speed automatic machines consisting of a number of working units with alternate operation with synchronisation between the units, such as packing machines for cigarettes or similar, in which method the individual working units are driven by a single main electric motor by means of associated transmission chains.

In automatic machines of the said type, two opposing requirements must be satisfied: on one hand, the least possible irregularity of motion is required; on the other hand, it must be possible to make emergency stops, in other words stops for any reason not explicitly provided for in the operating cycle of the machine, within a short time.

To reduce the degree of irregularity of motion, a flywheel is used to compensate for the load variations present in the operating cycle of the machine by modifying its kinetic energy. In order to enable the machine to be stopped in a short time, however, it is necessary for the inertial mass in motion to be very small. The use of release devices to disengage the fly-wheel in the case of an emergency stop does not fully resolve the problem, since the activation of the release devices may be too slow for the rapidity of stopping which is required.

The invention is therefore based on the problem of providing a method, and a device for its application to automatic machines, of the type described initially, with which it is possible to satisfy both opposing requirements in a simple and relatively economical way, ensuring the least possible irregularity of motion and the possibility of very rapid stopping in an emergency.

The invention resolves the above problem with a method of driving for automatic machines of the type described initially in which the variations of load on the main motor during the operating cycle of the machine are at least partially compensated for by the storage, in the form of reversible electrolytic energy, of:
- the electrical energy which the main motor restores in the phases of the machine cycle in which the resistant torque is inverted;
- the part of the electrical energy which is not supplied to the motor in the phases of the machine cycle in which the resistant torque is less than the mean value;
and by the restoration of the said reversible electrolytic energy in the phases of the machine cycle in which the resistant torque exceeds the mean value.

According to an improvement, it is also possible to prevent a reverse flow of the released electrolytic energy into the electrical power supply mains.

The individual working units with alternate operation must be synchronised with each other in such a way, compatible with the functional requirements of the machine, that the maximum resulting total torque required from the main motor is less than the maximum torque which the motor can supply in the specified excess temperature conditions.

The variations in load may be compensated for completely by the combination of, on one hand, the action of storage and release of reversible electrolytic energy, and, on the other hand, the action of storage and release of kinetic energy of an inertial mass of the flywheel type which may consist solely of the inertial mass of the rotating constructional parts of the machine itself, or may also comprise the additional inertial mass of another flywheel, the dimensions of the flywheel being made compatible with the maximum torque which can be supplied by the main motor and with the desired stopping times.

Another way of limiting the irregularity of the motion of the automatic machine is to adjust the rigidity and the damping coefficient of the main transmission in such a way that the irregularities of motion of the main motor at high frequency, such as vibrations or similar, are filtered out.

The said rigidity and damping coefficients of the transmission may be determined in such a way that the pass band of the frequencies of the variations of motion of the assembly comprising the rotor, transmission and inertial mass of the machine is lower than the frequencies of the harmonics which result from the development in Fourier series of the variation with time of the load on the motor in the machine operating cycle and which may be dangerous for the mechanical components.

The braking for the emergency stopping of the automatic machine is executed in a phase of the operating cycle of the machine in which the load on the motor is minimal.

The electric motor is preferably of the type known as "brushless", with three or more phases, while the power of the motor is controlled by controlling the amplitudes of the supply currents with a technique known as pulse width modulation (PWM), the modulation being controlled by a double closed control loop, in which the following are performed:
- synchronised measurement of the instantaneous actual velocity of the rotor of the motor, of the instantaneous actual angular position of the rotor, and of the actual currents of the phases;
- control of the velocity by what is known as the PID (proportional-integral derivative) method which supplies a reference current level obtained from a comparison of the said actual velocity with a nominal value of velocity;
- generation of the sequence of the phase currents on the basis of the said current reference level and the angular position of the rotor;
- control of the pulse width (PWM) of the motor supply currents provided by a rapid switching device (inverter) activated on the basis of the comparison with a constant frequency carrier of the phase currents produced by feedback by the measured currents.

The switching frequency may advantageously be selected to be greater by approximately one order of magnitude than the pass band for the variations of motion of the mechanical assembly consisting of the rotor of the main motor, the transmission, and the inertial masses of the working units of the machine.

The automatic machine is braked by supplying power in a suitably progressive way to the main motor in opposition to the load on the motor, so that the latter passes along a deceleration gradient.

To prevent phase displacement of the torque supplied by the main motor with respect to the instantaneous torque required by the machine, i.e. to prevent the activation of the motor in the opposite phase to that of the load, and in particular when in the operating cycle of the machine the resistant torque of the machine has significant variations in short time intervals and especially in the case of a machine with periodic action, in which the variations of resistant torque are fairly repetitive in the operating cycle, the method according to the invention provides for the combination of the closed velocity control loop with partial open-loop control.

The open loop provides supply current control values which are generated in advance of the actual instant of supply of the corresponding torque by the motor, and which are generated on the basis of the actual measured velocity of the rotor and of a stored table or a calculated function of correlation between each instant of the operating cycle of the machine, the corresponding torque to be supplied at the said instant, and the associated nominal velocity of the rotor, while the said control values are combined, with a specified weighting, with those provided by the closed control loop.

The chronological progress of the operating cycle is measured with reference to the angular position of a rate determining element caused to rotate by the main motor.

When the resistant torque of the machine is a function of the same power of the velocity at any instant of the operating cycle, i.e. for any angular position of the rate determining element, only one correlation function between the angular position of the rate determining element and the reference value of the current, multiplied by a factor proportional to a power of the velocity, is stored.

The weighting is executed by using the proportional and integral constants as the control values of the closed loop, with a control method of the type known as PI, and a proportionality factor for the control values of the open loop.

The power supply to the motor is provided preferably, but not necessarily, in alternating sinusoidal form with three or more phases.

The method according to the invention therefore enables the inertial flywheel-type mass of an automatic machine to be reduced considerably, ensuring the minimum irregularity of motion and also very rapid stopping in an emergency.

The invention also relates to a device for the application of the said method.

Further characteristics of the method and the characteristics of the device are described in the subsidiary claims.

The details of the method and device according to the invention will be made clear in the following description of a non-restrictive embodiment illustrated by way of example in the attached drawings, in which
Fig. 1 is a block diagram of a machine with a first variant embodiment of the driving device according to the invention;
Fig. 2 represents, in a similar way to Fig. 1, an improvement of the device in Fig. 1;
Fig. 3 is a diagram of the resistant torque on the main motor in the operating cycle of a cigarette packing machine in a condition of non-optimal synchronisation of the elements of the machine;
Fig. 4 is a diagram similar to that in Fig. 3, in a condition of optimal synchronisation which is nonetheless compatible with the functional requirements of the machine.

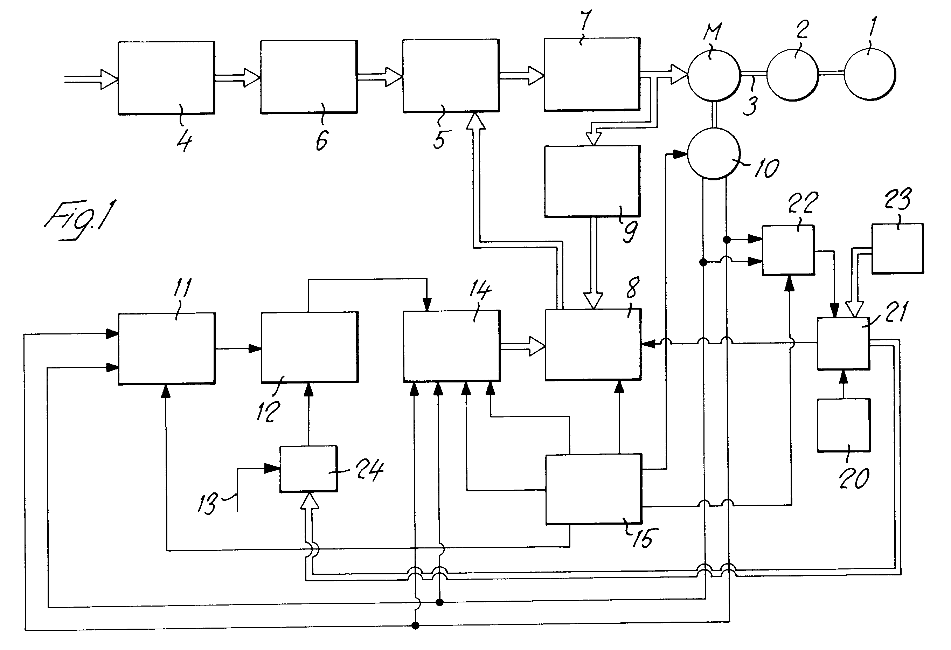

With reference to Fig. 1, the inertial mass of a high-speed automatic machine comprising a number of working units operating in an alternating mode with synchronisation between them is indicated by 1. 2 indicates the inertial mass of any additional flywheel which, as will be made clear subsequently, may also be omitted. The working units, and the flywheel 2 if present, of the machine 1 are coupled by a suitable transmission 3 to a common main electric motor M.

The main motor M is of the type known as "brushless" and is supplied with alternating current with three or more phases. The working units are synchronised with each other in such a way that, in a manner compatible with the functional requirements, the maximum value of the resistant torque present at each instant of the machine cycle is minimal and less than the maximum torque which can be supplied by the motor M in the specified excess temperature conditions.

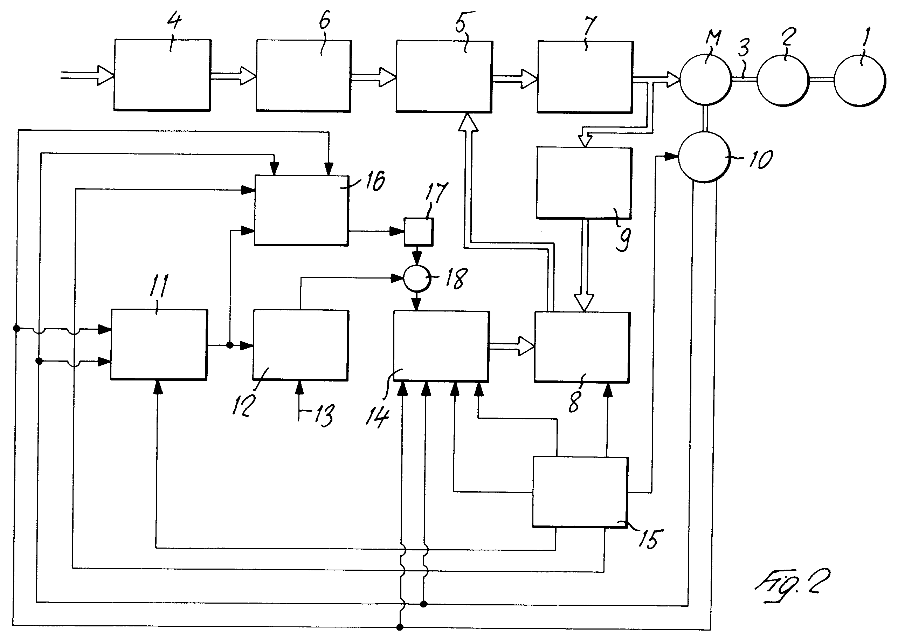

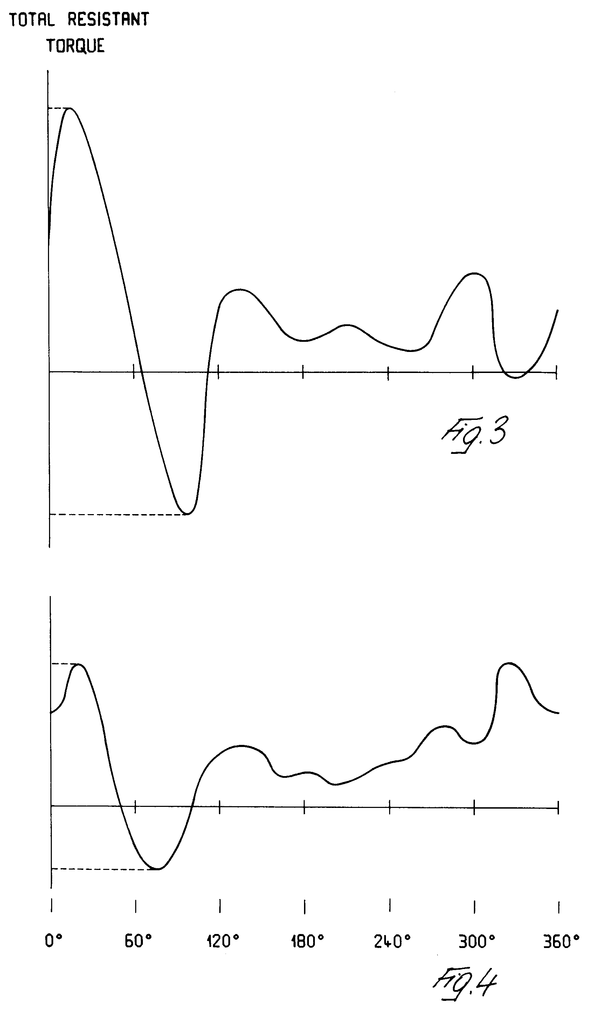

The transmission 3 has rigidity and damping coefficients such that high-frequency irregularities of motion which might cause vibrations in the drive chains of the machine 1 are not transmitted. In particular, the values of these rigidity and damping coefficients are determined in such a way that the pass band of the frequencies of the variations of motion of the assembly comprising the rotor of the motor M, the transmission 3 and total inertial mass of the rotating structural parts of the machine 1 is lower than the frequencies of the harmonics which result from the development in Fourier series of the function of variation of the load in the operating cycle of the machine (Figs. 3 and 4) and which may be dangerous for the components of the machine.

The main motor M is supplied with direct current, obtained by rectification with a Graetz bridge 4 which prevents a reverse flow of electrical energy to the mains. The direct current is supplied to one power stage 5, which consists of a rapid-switching converter, known as an inverter, in which it is changed to alternating current with the number of phases - three in this example - required for the main motor M. Between the rectifier 4 and the inverter 5 is interposed a unit 6, for the storage and release of electrical energy in the form of reversible electrolytic energy, which may consist of a battery of electrolytic capacitors or some other suitably designed element. The alternating supply current may preferably be of the sinusoidal type and is supplied to the motor M through inductances 7 connected in series to the individual phases. The inductances 7 reduce the current form factor, limiting the power dissipation due to the Joule effect. The power of the motor M is controlled by varying the amplitude of the pulses of the supply currents. For this purpose, according to the example in Fig. 1, a control circuit 8 for the inverter 5 is provided and operates in a closed control loop. This loop generates the feedback signals for the control of the rapid switches which constitute the inverter 5; it measures the actual values of the currents leaving the inverter, by means of a measuring circuit 9 with suitable sensors, for example Hall effect probes. The control circuit 8 is of the so-called pulse width modulation type, known also as PWM, and controls the switching procedure of the inverter 5 by comparing the feedback signals of the phase currents with a fixed-frequency carrier. In particular, to ensure high stability of drive of the machine, the value of the switching frequency of 5 is selected to be higher than the natural frequency and approximately one order of magnitude higher than the pass band for the variations of the drive motion of the assembly consisting of the rotor, transmission 3 and inertial mass 1, 2 of the machine. The PWM method enables the dissipation to be reduced considerably by comparison with other systems (linear amplifiers). The inverter 5 consists of an electronic semiconductor device such as an SCR, GTO, transistors, or MOSFET. SCR components should be avoided in the particular case of high-speed automatic machines, however.

A device for measuring the actual angular velocity of the rotor of the motor M is used for controlling the sequence of phases of the alternating current used to supply the motor M. This measuring device may be of any type. In the example shown, it consists of a position transducer, known as a resolver, 10, for example of the type comprising stator and rotor windings, the latter being caused to rotate by the main motor M, and providing at its output a voltage proportional to the angular position of the rotor. The stator windings are supplied with sinusoidal voltages with an electrical phase displacement of 90° between them. The rotor winding is coupled to a rotating transformer which has a voltage proportional to the angular position of the rotor at the terminals of its secondary winding.

The said signal is supplied to a tachometer simulation circuit 11 synchronised on a common time base, which derives from the said signal a signal proportional to the actual velocity of the rotor, this actual velocity signal being supplied to a velocity control circuit 12, in which a control signal for a three-phase logic circuit 14, to which the output signals from the transducer 10 are directly supplied, is generated on the basis of a comparison with a velocity reference signal 13. The three-phase logic circuit 14 generates the correct sequence of the phases which is transformed into a pulse modulation in the control circuit 8. The velocity of the rotor is controlled by a method known as PID (proportional, integral, differential). The chronological synchronisation of the control circuit components, and the carrier of the control circuit 8 generating the alternating signals of the transducer 10 are provided by a clock 15, specifically a quartz oscillator, provided with a plurality of outlets with different wave frequencies and forms. The clock 15 supplies alternating signals of synchronisation with the corresponding characteristics to the tachometer simulation circuit 11, to the three-phase logic circuit 14, to the control circuit 8 and to the transducer 10.

According to a further characteristic, the pass band of the frequencies of the assembly comprising the rotor of the motor M, the transmission 3 and inertial mass 1, 2 of the machine with respect to the variations of load may be excessively reduced by an excessive increase of the inductances, since this increases the effects of the electrical pole on stability.

Figs. 3 and 4 show a graphic representation of the theoretical curve of resistant torque, in other words of the load on the motor M in the operating cycle of the machine. The electrical energy supply circuit for the motor M as described above enables the irregularities of the drive to be compensated for at least partially by the storage in the battery of the capacitors 6 of the surplus electrical energy supplied in the phases of the cycle in which the machine restores energy (negative torque) and by the release of this energy in the phases of torque absorption. The magnitude of the variations of reversible electrolytic energy in the batteries of capacitors 6 therefore depends on the moment of equivalent total inertia of the machine returned to the motor shaft, and decreases and increases with an increase and decrease respectively of the said moment of total inertia.

The rectifier 4, in other words the Graetz bridge, prevents the reverse flow of reversible electrolytic energy which might cause disturbances in the mains, so that the recycling of power in the machine is restricted to the batteries 6 of electrolytic capacitors.

The variations of load may be more or less completely compensated for by the reversible electrolytic energy. More correctly, part of the compensation is provided mechanically, by the storage and release of kinetic energy by the inertial flywheel-type mass of the rotating structural elements of the machine 1 and of the motor M. It may be convenient to provide, in a way compatible with the specified emergency stop time, a further inertial mass of the flywheel type which may be obtained by increasing the inertial mass of the rotating structural parts of the machine 1 and of the motor M or by providing an additional flywheel 2. This arrangement makes it possible to reduce the voltage peaks at the terminals of the batteries of capacitors 6 and the supply currents.

The machine 1 is stopped in emergency by supplying power to the motor M in opposition to the load, in a progressive way, to provide a deceleration gradient. To prevent excessive stress on the mechanical parts, it is advantageous to synchronise the instant of the start of the deceleration gradient with the instant of the operating cycle at which the load on the motor M has the minimum values of torque.

According to a variant embodiment, it is possible to use trapezoidal control as an alternative to sinusoidal control, provided that the residual torque ripple is of acceptable size.

According to an improvement, the supply circuit of the motor M may be provided with various protection circuits, not illustrated in detail, for example regeneration to resistance circuits which intervene when the voltage at the terminals of the capacitors exceeds the limit value, especially during braking.

The braking of the machine either under manual control or under the control of an automatic safety device is advantageously executed in a phase of the cycle in which the resistant torque is minimal. For this purpose, with reference to the example in Fig. 1, braking phase control means are provided. The means of control, whether manual or automatic using a safety device capable of monitoring specified functions, are indicated as a whole by 20. The braking is controlled by a central unit 21, for example a microprocessor or similar. The input of the microprocessor 21 is connected to a detector 22 of the phases of the operating cycle of the machine, which determines the present phase of the machine cycle from the angular position signals of the position transducer 10, and a programmable memory 23 in which the phases of the machine cycle corresponding to the minimum values of the resistant torque are stored. The microprocessor 21 switches the velocity reference in the device 24 to the values of deceleration programmed into the memory 23. In the event of a braking command, the microprocessor 21 compares the present phase of the machine cycle as determined by the detector 22 with the phases of lower resistant torque stored in the memory 23, and does not send the braking control signals until the present phase detected coincides with one of those which is stored and corresponds to the minimum resistant torque. The above is possible because the phases of the machine cycle with lower resistant torque are repeated with a certain regularity in the individual machine cycles.

When the load diagram of the motor M has significant variations of torque in short time intervals, it may occur that the motor is driven in such a way as to supply a torque in phase opposition to the load. In this case, adjustment of the phase of the load will be necessary.

The diagrams in Figs. 3 and 4 show the variation of the total resistant torque in the operating cycle of the machine with and without phase adjustment respectively. The reduction of the peaks and a greater uniformity of the resistant torque in the operating cycle are evident.

In particular, for use in machines with periodic operation with a fairly repetitive variation of the resistant torque in the machine cycle, it is possible to use the variant of the device shown in Fig. 2.

In this example, the current reference value is controlled partially by a closed control loop of the type described by reference to Fig. 1, and partially by an open loop, the two control signals supplied to the three-phase logic circuit 14 from the two control loops (open and closed) being combined with specified weights or proportionality factors.

In particular, the open loop comprises a storage and processing unit 16 in which a level of the input current of the three-phase logic circuit 14 corresponding to the said torque for each instant of the operating cycle of the machine is stored or is calculated for each instant of the operating cycle. The chronological variation of the operating cycle is measured according to the angular distance covered by the transducer 10. The storage and processing unit 16 produces, in advance of the actual instant of supply of the torque by the motor M, a reference signal of the sequence of the phase currents according to the angular position of the transducer 10 and the actual velocity which is measured by means of the transducer 10 and the tachometer simulation device 11. This reference signal of the sequence of the phase currents is supplied to the corresponding three-phase logic circuit 14 in a combination suitably weighted with the reference signal level obtained from the rotor velocity control circuit 12 according to the preceding example. In particular, the velocity control circuit 12 of the type known as PI (proportional integral) supplies a control signal, weighted by the proportional and integral constants, to a combining circuit 18, while the signal obtained from the storage and processing unit 16 is multiplied by a proportionality factor in a suitable circuit 17 before it also is supplied to the combining circuit 18, whose output is connected to the three-phase logic circuit 14. In this way, the control of the power supply to the motor M can be matched to the variations of the parameters which determine the load, while still providing sufficient stability of operation and drive. The control signal of the open loop, in other words of the storage and processing unit 16, is also generated with allowance for the nominal and actual conditions of operation of the motor M, in other words the current velocity of the rotor and the torque which the motor has to supply in the next instant. Consequently, when the velocity control circuit 12 operating in a closed loop is not required to correct the fastest load variations, these are controlled instead by the unit 16 in an open loop, but the control signal of the storage and processing unit 16 remains linked to the predetermined conditions, which are stored or may be predicted with a suitable algorithm, of the load variations expected in the operating cycle, thus preventing phase displacement between the activation of the motor M and the required load. This is done by means of tables of the correlation between the instants of the operating cycle and the torque to be supplied by the motor M, and of the correlation between the instants of the operating cycle and the angular velocity of the rotor. As clearly seen in Fig. 2, the unit 16 is also connected to the oscillator 15 and to the sinusoidal signal outputs of the transducer 10, and receives the actual value of the angular velocity of the rotor calculated in the tachometer simulation circuit 11.

When the resistant torque, in other words the load, is a function of the same power of the velocity for any instant of the operating cycle of the machine, the storage and advance processing unit 16 determines or only stores the correlation between the angular position of the transducer 10 and the current strength which is multiplied by a factor proportional to a power of the velocity.

Since the maximum torque which can be supplied by the motor M and the inertial mass of the rotor depend, given an equal nominal torque, on the type of magnets used, the type of magnets also considerably affects the performance and a selection must therefore be made in line with the requirements.

## Claims

1. Method of driving for automatic machines, particularly for high-speed automatic machines consisting of a number of working units with alternate operation with synchronisation between the units, such as packing machines for cigarettes or similar, in which method the individual working units are driven by a single main electric motor (M) by means of associated transmission chains (3), characterised in that the variations of load on the main motor during the operating cycle of the machine are at least partially compensated for by the storage, in the form of reversible electrolytic energy, of:
- the electrical energy which the main motor (M) restores in the phases of the machine cycle in which the resistant torque is inverted; and
- the part of the electrical energy which is not supplied to the motor in the phases of the machine cycle in which the resistant torque is less than the mean value;
and by the restoration of the said reversible electrolytic energy in the phases of the machine cycle in which the resistant torque exceeds the mean value.

2. Method according to Claim 1, characterised in that a reverse flow of the released electrolytic energy into the electrical power supply mains is prevented.

3. Method according to Claim 1 or 2, characterised in that the individual working units with alternate operation are synchronised with each other in such a way that the maximum total resulting torque required from the main motor is very small and less than the maximum torque which the motor can supply in the specified excess temperature conditions.

4. Method according to one or more of the preceding claims, characterised in that the variations in load may be compensated for completely by the combination of, on one hand, the action of storage and release of reversible electrolytic energy, and, on the other hand, the action of storage and release of kinetic energy of an inertial mass of the flywheel type which may consist solely of the inertial mass of at least some of the rotating constructional parts of the machine itself, or may also comprise the additional inertial mass of another flywheel (2), the dimensions of the flywheel (2) being made compatible with the maximum torque which can be supplied by the main motor (M) and with the desired stopping times.

5. Method according to one or more of the preceding claims, characterised in that the rigidity and the damping coefficient of the transmission between the motor and the machine are adjusted in such a way that the irregularities of motion of the main motor at high frequency, such as vibrations or similar, are filtered out.

6. Method according to Claim 5, characterised in that the said rigidity and damping coefficients of the transmission may be determined in such a way that the pass band of the frequencies of the variations of motion of the assembly comprising the rotor of the motor (M), the transmission and the inertial mass of the machine is lower than the frequencies of the harmonics which result from the development in Fourier series of the variation with time of the load on the motor in the machine operating cycle and which may damage the mechanical components.

7. Method according to one or more of the preceding claims, characterised in that the braking for the emergency stopping of the automatic machine is executed in a phase of the operating cycle of the machine in which the load on the motor is minimal.

8. Method according to one or more of the preceding claims, characterised in that the electric motor (M) is preferably of the type known as "brushless", with three or more phases, while the power of the motor (M) is controlled by controlling the strength of the supply current with a technique known as pulse width modulation (PWM), the modulation being controlled by a closed control loop, in which the following are performed:
- synchronised measurement of the instantaneous actual velocity of the rotor of the motor (M), of the instantaneous actual angular position of the rotor, and of the actual currents of the phases;
- control of the velocity by what is known as the PID (proportional-integral derivative) method which supplies a reference current level obtained from a comparison of the said actual velocity with a nominal value of the velocity;
- generation of the sequence of the phase currents on the basis of the said current reference level and the angular position of the rotor;
- control of the pulse width (PWM) of the motor supply currents provided by a rapid switching device (inverter) (5) activated on the basis of the comparison with a constant frequency carrier of the phase currents produced by feedback by the measured currents.

9. Method according to Claim 8, characterised in that the switching frequency is selected to be greater by approximately one order of magnitude than the pass band for the variations of motion of the mechanical assembly consisting of the rotor of the main motor (M), the transmission (3), and the inertial masses of the working units of the machine (1).

10. Method according to one or more of the preceding claims, characterised in that the automatic machine is braked with a deceleration gradient by supplying power in a suitably progressive way to the main motor in opposition to the load on the motor.

11. Method according to one or more of the preceding Claims 8 to 10, characterised in that, when there are approximately periodic variations of the resistant torque in the operating cycle, the control of current strength by the closed control loop is combined with partial open-loop control, this open loop controlling a level of reference current which is generated in advance of the actual instant of supply of the corresponding torque by the motor, and which is generated on the basis of the actual measured velocity, the position of the rotor, and of a stored table or a calculated function of correlation between each instant of the operating cycle of the machine, the corresponding torque to be supplied at the said instant, and the associated nominal velocity of the rotor, while the said control value of the open loop is combined, with a specified weighting, with that provided by the closed control loop.

12. Method according to Claim 11, characterised in that the chronological progress of the operating cycle is measured with reference to the angular position of a rate determining element (10) caused to rotate by the main motor (M).

13. Method according to the preceding Claims 11 and 12, characterised in that, when the resistant torque of the machine is a function of the same power of the velocity at any instant of the operating cycle, i.e. for any angular position of the rate determining element, only one correlation function between the angular position of the rate determining element and the strength of the supply current, multiplied by a factor proportional to a power of the velocity, is stored.

14. Method according to one or more of the preceding Claims 10 to 12, characterised in that the reference value of the current is controlled by using the proportional and integral constants of a control method of the type known as PI for the control values of the closed loop, and a proportionality factor for the control values of the open loop.

15. Method according to one or more of the preceding claims, characterised in that the power supply to the motor is provided preferably in alternating sinusoidal form with three or more phases.

16. Device for the application of the method of driving an automatic machine according to one or more of the preceding claims and comprising a main electric motor (M) which is activated under the control of a circuit for power supply (4 to 16) and for control of the power supplied, and is connected dynamically by separate transmission drive chains (3) to each of the working units, which operate alternately and are synchronised with each other, of a machine (1), the device being characterised in that a unit (6) for the storage and release of electrical energy in the form of reversible electrolytic energy is provided between the electrical power supply mains and the power stage (5).

17. Device according to Claim 16, characterised in that means of preventing a reverse flow of electrical energy to the electrical power supply mains may be provided between the storage unit (6) and the said mains.

18. Device according to Claim 17, characterised in that the motor (M) is supplied with alternating current with three or more phases, with the provision of a rectifier stage (4), for example a Graetz bridge connected in parallel to a battery of capacitors (6), while the power stage (5) consists of a rapid switching conversion circuit (5), known as an inverter.

19. Device according to one or more of the preceding claims, characterised in that a pulse width modulation (PWM) control circuit (8) is provided and controls the switching of the inverter (5) with a switching frequency higher than the natural frequency of the assembly comprising the rotor of the motor (M), the transmission (3), and the inertial mass (1, 2) of the machine, and higher preferably by one order of magnitude, than the pass band for the variations of the motion of the said system.

20. Device according to Claim 19, characterised in that the motor (M) is of the type known as "brushless" and the control circuit (8) of the inverter (5) is connected in a closed loop for controlling the supply currents, i.e. the power supplied by the motor, the said loop having:
- a device (10) for measuring the angular position of the rotor of the motor (M), which generates two signals correlated with the position;
- a device (10, 11) for measuring the velocity of rotation of the rotor of the motor (M), which generates a signal proportional to the actual velocity of rotation;
- a velocity control circuit (12), of the type known as PID, to which are supplied the signal proportional to the actual rotation velocity and a signal corresponding to the reference nominal angular velocity, and which generates on the basis of the said signals a control signal at a reference level of current;
- a circuit for generation of the sequence of phase currents (14), for example of the three-phase logic type, to which are supplied the signal for control of velocity at the level of the reference current and the corresponding rotor position signals, and which generates a correlated sequence of the phase currents supplying the motor (M), this sequence being supplied to the control circuit;
- a circuit (9) for measuring the actual phase currents, for example Hall effect probes, which are also connected to the control circuit (8), which comprises a stage which compares the said two generated and actual sequences of the phase currents, and which controls with the aid of a constant-frequency carrier the modulation of the functions of the phase currents, in other words the switching of the inverter (5) according to the signal of comparison of the said sequences;
- a common oscillator circuit (15) which generates the synchronisation time base signal for the measuring devices (10, 11) and for the control circuits (12) for generation of the sequence of the phase currents (14) and control currents (8).

21. Device according to Claim 20, characterised in that the device for measuring the angular velocity of the rotor of the motor (M) comprises a rate determining element which is caused to rotate by the main motor (M), and which has two stator windings supplied with sinusoidal voltages with an electrical phase difference of 90° and a rotor winding coupled to a rotating transformer which has a voltage proportional to the angular position of the rotor at the terminals of the secondary winding, this voltage being supplied to a tachometer simulation circuit (11) which, operating on a common time base, produces a signal at a level corresponding to the actual velocity.

22. Device according to one or more of the preceding Claims 16 to 21, characterised in that the closed loop for controlling the current strength is associated with an open control loop, whose control signal is combined, with a specified weighting, with the control signal of the circuit (14) controlling the sequence of the phases of the alternating supply current generated in the closed control loop, the open control loop being provided with a storage and processing unit (16) in which is stored or calculated a reference level of current which corresponds to each instant or to specified significant instants of the operating cycle, and which is selected according to the actual velocities and angular positions of the motor (M), these values being predetermined in such a way as to assign a suitable advance to the reference level with respect to the actual instant of supply of the torque, the said signal being subsequently combined (18), after multiplication (17) by a proportional factor, with the control signal of the velocity control circuit (12) of the closed loop before being supplied to the circuit (14) controlling the sequence of the phases of the supply currents, the said storage and processing unit (16) being connected to the outputs of the tachometer simulation circuit (11) and of the rate determining element (10) which supplies a signal indicating its angular position in the operating cycle corresponding to the chronological progress of the cycle, and through a multiplier circuit (17) and a combining circuit (18) to the input of the circuit (14) controlling the sequence of the phases of the supply current.

23. Device according to one or more of the preceding claims, characterised in that the motor supply current is of the sinusoidal type, and that an inductance (7) may be connected in series to the motor for each phase.

24. Device according to one or more of the preceding claims, characterised in that the inductances are variable.

25. Device according to one or more of the preceding claims, characterised in that the working units of the machine are synchronised with each other in such a way that the maximum value of the resulting total torque required from the motor (M) is minimal and is less than the maximum torque suppliable by the motor in the specified excess temperature conditions.

26. Device according to one or more of the preceding claims, characterised in that the transmission (3) is designed in such a way that it has a rigidity and a damping coefficient which filter out the irregularities of motion at high frequency, in particular in such a way that the pass band of the assembly comprising the rotor of the motor (M), the transmission (3) and the inertial mass of the machine (1, 2) has a pass band for the irregularities of motion lower than the frequencies of the harmonics which result from the development in Fourier series of the variation with time of the load on the motor (M) in the operating cycle of the machine, and which may damage the mechanical components of the machine.

27. Device according to one or more of the preceding claims, characterised in that an inertial mass (1, 2), for mechanical compensation for the variations of load, is provided, and may consist solely of the inertial mass of at least some of the rotating structural elements of the machine and of the motor (M), or of a further additional flywheel (2), and its dimensions are compatible with the maximum torque suppliable by the motor (M) and with the specified upper limits for the emergency stopping times.

28. Device according to one or more of the preceding claims, characterised in that the following are provided:
- manual or automatic means of controlling braking (20);
- a detector (22) of the present phase of the machine cycle, which determines the said present phase from the signals which indicate the angular position of the rotor of the motor (M) and which are generated by an angular position detector (10);
- a memory in which the phases of the machine cycle in which the resistant torque is minimal are stored;
- a central unit (21) for controlling braking, to whose inputs are connected the braking control means (20), the detector (22) of the present phase of the machine cycle, and the memory (23), this central unit (21) having means for comparing the present phase as determined by the detector means (22), with the phases stored in the memory (23), and braking control means which operate for this purpose a switching circuit (24) when the present detected phase (22) corresponds to one of the stored phases (23).
